# EUROPEAN PATENT SPECIFICATION

(11) **EP 1 473 633 B1**
(45) Date of publication and mention of the grant of the patent: **20.02.2013**
(21) Application number: 03009984.0
(22) Date of filing: 02.05.2003
(51) Int. Cl.: G06F 11/36

(54) **Programmable unit with debug resources**
Programmierbare Einheit mit Fehlerbeseitigungsressourcen
Unité programmable avec ressources de débogage

(43) Date of publication of application: 03.11.2004
(73) Proprietor: Infineon Technologies AG, 85579 Neubiberg (DE)
(72) Inventor: Siebert, Harry, 82178 Puchheim (DE)
(74) Representative: Repkow, Ines

(56) References cited:
- US-A- 5 852 617
- US-A1- 2002 194 549
- US-A1- 2003 046 666

## Description

The present invention relates to an apparatus as claimed in the preamble of patent claim 1.

Programmable units such as microprocessors, microcontrollers, signal processors etc., have been known for many years, in innumerable embodiments.

One known problem of programmable units is that incorrect operation of a programmable unit or of the system which contains it can frequently not be localized and/or rectified directly.

Localization and rectification of faults which occur in programmable units can be carried out using debug resources that are contained in the programmable unit; together with a control device which is provided outside the programmable unit, the debug resources form a debugger, by means of which faults which occur in the programmable unit can be localized and rectified.

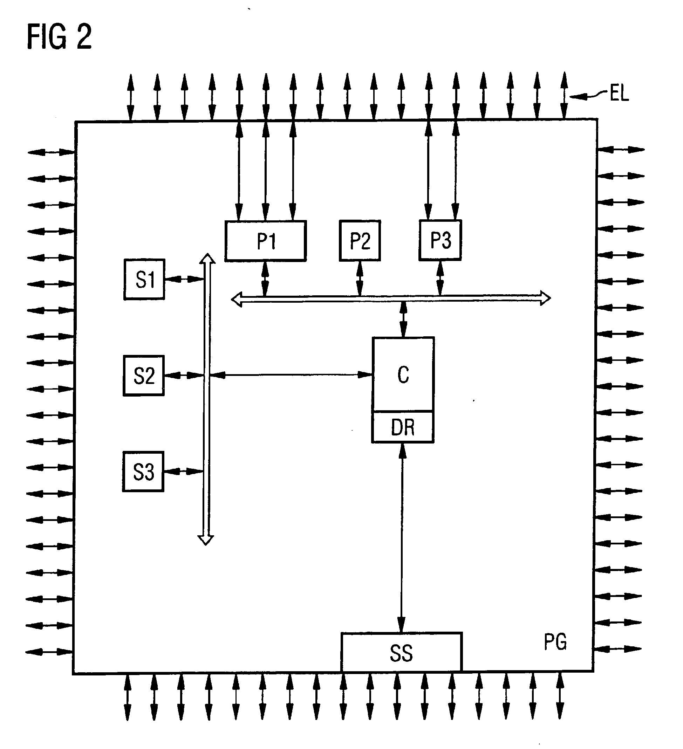

A programmable unit which contains debug resources is illustrated in Figure 2.

The programmable unit which is illustrated in Figure 2 is a microcontroller that is annotated with the reference symbol PG. The microcontroller PG has a large number of input and/or output connections, which can be connected via external lines EL to components, which are provided outside the microcontroller, in the system which contains the microcontroller, and contains
- a core C,
- peripheral units P1, P2 and P3 which are connected to the core C via a first bus BUS1,
- memory devices S1, S2 and S3 which are connected to the core C via a second bus BUS2,
- debug resources DR which are connected to the core C, and
- an interface SS, via which data is transmitted between the debug resources DR and an external control device which is provided outside the microcontroller, but is not shown in Figure 2.

For the sake of completeness, it should be noted that one or more or all of the microcontroller components that have been mentioned are connected to associated input and/or output connections of the microcontroller. In Figure 2, connections such as these are shown only for the peripheral units P1 and P3 and for the interface SS. However, connections such as these can also be provided for any other desired microcontroller components. The relevant microcontroller components can transmit data to external system components, and can receive data from external system components, via the input and/or output connections which are associated with the respective microcontroller components, and via the external lines EL which are connected to them.

The peripheral units P1 to P3 are, for example, an A/D converter, a timer, a coder, a compression device, a CAN interface, or other units which can be integrated in a microcontroller.

The memory devices are, for example, an RAM, an ROM, and a flash memory.

The debug resources DR make it possible, for example, to identify the occurrence of specific states or events within the core C and to carry out or to initiate specific actions when a state such as this or an event such as this has occurred, in which case both the states or events to be detected and the actions to be carried out or to be initiated on the occurrence of such a state or event can be predetermined by a control device which is provided outside the microcontroller. The communication with the external control device takes place via the interface SS, which, for example, may be formed by a NEXUS interface, a JTAG interface or any other desired interface.

DE 101 19 266 A1 discloses a programmable unit with even more powerful debug resources.

The states or events whose occurrence can be detected by debug resources may, for example but far from exclusively, comprise:
- access by the programmable unit or by specific components of it to specific memory addresses or registers, and/or
- the transfer of specific data within the programmable unit, and/or
- a specific state of the instruction pointer.

The actions which the debug resources carry out or initiate when a state or event such as this, or some other state or event, occurs may, for example but likewise not exclusively, comprise:
- a signal for the fact, that the condition to be monitored for has occurred, to a device which is provided outside the programmable unit,
- the reading or the editing of the contents of specific memory elements or registers,
- the outputting of trace information, that is to say the outputting of addresses, data and/or control signals which are transferred or used within the programmable unit, to a device which is provided outside the programmable unit,
- stopping the running of a program,
- continuation of the running of a program in the so-called single step mode, or
- the initiation of the core C of the programmable unit to run specific programs.

Said actions and other actions can at least partially also be carried out initiated by the external control device without a specific state or a specific event having occurred.

The provision of debug resources thus offers a wide range of options by which faults which occur in the programmable unit can be localized and rectified.

However, experience has shown that, even when using the known debug resources, it is not possible to localize and rectify all faults which occur within the programmable unit and/or the system which contains it. Additional test equipment and/or instruments therefore have to be used quite frequently for localization and rectification of faults, although this is associated with considerable effort.

Further prior art is disclosed in document US-A-2002/0194549. This prior art does, however, not provide a satisfactory solution of the above metioned problems.

The present invention is therefore based on the object of finding a possible way in which faults which occur in programmable units or in systems which contain programmable units can be localized and rectified more quickly and more easily than is the case at the moment.

According to the invention, this object is achieved by the programmable unit as claimed in patent claim 1.

The programmable unit according to the invention is distinguished among others
- in that the debug resources comprise one or more components which have connections to input and/or output connections of the programmable unit, via which data is transmitted between other components of the programmable unit and external system components which are provided outside the programmable unit, and
- in that the debug resource components which are connected to the input and/or output connections are designed such that they can detect data which is transmitted via external lines which can be provided between the input and/or output connections and the external system components.

The detection of the data which is transmitted via the external lines makes it possible for the debug resources to localize and rectify faults which occur in the programmable unit which conventional debug resources either cannot localize or rectify at all, or can localize and rectify them only with a very large amount of effort, owing to the lack of appropriate access capabilities to this data.

Furthermore, this also makes it possible to localize and rectify faults which occur in system components which are provided outside the programmable unit.

Furthermore, the debug resource components which are connected to the input and/or output connections can, for example, determine how often and when data is transmitted via the external lines, and whether and if appropriate when the programmable unit or some other system component may or should emit additional data or less data to the external lines.

Advantageous developments of the invention can be found in the dependent claims, in the following description and in the figures.

The invention will be explained in more detail in the following text using exemplary embodiments and with reference to the figures, in which:
- Figure 1: shows the configuration of the programmable unit which will be described in more detail in the following text, and
- Figure 2: shows the configuration of the conventional programmable unit described initially.

The programmable unit which will be described in the following text is a microcontroller. The special features of the microcontroller as described in the following text, to be more precise the special features of the debug resources which are provided in it and which will be described in the following text may, however, also be used in any other desired programmable units, for example in microprocessors, signal processors, etc.

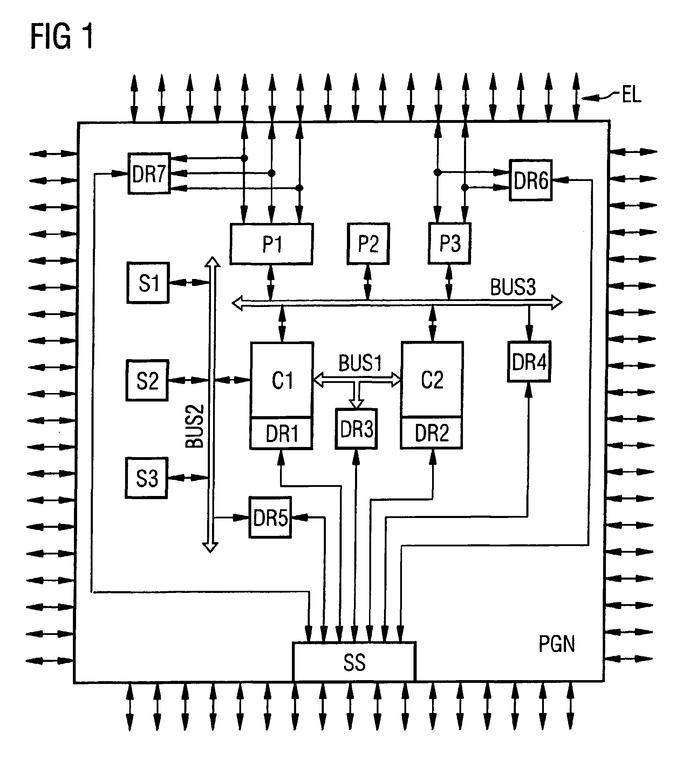

The microcontroller considered here is illustrated schematically in Figure 1. For the sake of completeness, it should be mentioned that only those components of the microcontroller which are of particular interest in the present case are illustrated and described.

The microcontroller which is shown in Figure 1, and which is annotated with the reference symbol PGN, has a large number of input and/or output connections, which can be connected via external lines EL to components, which are provided outside the microcontroller, of the system which contains the microcontroller, and contains
- a first core C1,
- a second core C2,
- peripheral units P1, P2 and P3 which are connected to the cores C1 and C2 via a first bus BUS1,
- memory devices S1 S2 and S3 which are connected to the cores C1 and C2 via a second bus BUS2,
- a third bus BUS3 which connects the cores C1 and C2 to one another,
- debug resources DR1 to DR7, and
- an interface SS, via which data is transmitted between the debug resources DR and an external control device which is provided outside the microcontroller but is not shown in Figure 1.

The components of the microcontroller which are annotated with the same reference symbols as the components contained in the microcontroller PG shown in Figure 2 are identical or mutually corresponding components.

The actual special feature of the microcontroller described here is its debug resources, in particular its debug resource components DR6 and DR7.

Of the debug resource components DR1 to DR7 which form the debug resources,
- the debug resource component DR1 is connected to the first core C1,
- the debug resource component DR2 is connected to the second core C2,
- the debug resource component DR3 is connected to the first bus BUS1,
- the debug resource component DR4 is connected to the second bus BUS2,
- the debug resource component DR5 is connected to the third bus BUS3,
- the debug resource component DR6 is connected to two input and/or output connections of the microcontroller, to be more precise to the input and/or output connections of the microcontroller which are associated with the peripheral unit P3, and
- the debug resource component DR7 is connected to three input and/or output connections of the microcontroller, to be more precise to the input and/or output connections of the microcontroller which are associated with the peripheral unit P1.

The input and/or output connections which have been mentioned above and to which the debug resource components DR6 and DR7 are connected are input and/or output connections that are reserved for the peripheral units P1 and P3, respectively; data to be emitted from the microcontroller is emitted from the peripheral units P1 and P3 via these input and/or output connections, and/or data which originates from outside the microcontroller and is intended for the peripheral units P1 and P3 is supplied to the peripheral units P1 and P3 via these input and/or output connections.

Furthermore, the debug resource components DR1 to DR7 are connected to a control device which is provided outside the microcontroller. This connection is made via the interface SS, input and/or output connections of the microcontroller which are associated with the interface SS, and external lines which connect these input and/or output connections and the external control device to one another. The input and/or output connections via which the debug resource components DR1 to DR7 are connected to the external control device are, however, not those mentioned above, to be more precise not the input and/or output connections which are associated with the peripheral units P1 and P3. This means no data which is intended for the debug resource components DR6 and DR7 is transmitted via the input and/or output connections which are associated with the peripheral units P1 and P3 and, normally, no data which originates from the debug resource components DR6 and DR7, either.

However, it is possible to provide for the debug resource components DR6 and DR7 to use the input and/or output connections which are associated with the peripheral units P1 and P3 to emit data which is used for testing the external lines which are connected to them and/or the devices which are connected to one another via these lines.

In the example under consideration, the interface SS is an interface designed in accordance with the NEXUS Standard, but could also be a different interface, for example a JTAG interface.

Via this interface SS
- the external control device predetermines for the debug resource components DR1 to DR7 how they must respond, to be more precise what checks and actions they must in each case carry out, and
- data which is supplied to the interface SS from the debug resource components DR1 to DR7 is passed on to the external control device.

There are two possible ways to pass on the data which is supplied to the interface SS from the debug resource components DR1 to DR7: the data is either passed on immediately after being received (or as soon as possible after this) to the external control device, or the data is temporary stored in the interface or in some other microcontroller component, and is made available for retrieval by the external control device.

The fact that the debug resource components DR6 and DR7 are connected to the input and/or output connections which are associated with the peripheral units P1 and P3 means that the debug resource components DR6 and DR7 are connected to the relevant input and/or output connections
- either directly, that is to say without the interposition of any microcontroller components whatsoever,
- or indirectly, that is to say via output drivers, input amplifiers or other microcontroller components which are not shown in Figure 1.

If the debug resources DR6 and DR7 are connected "only" indirectly to the input and/or output connections, the microcontroller components which are located between the debug resources DR6 and DR7 and the input and/or output connections are preferably only those components which do not modify the content of the received data or the data that is to be emitted, that is to say they are only drivers, amplifiers and apparatuses such as these.

As will be described in more detail later, the debug resource components DR6 and DR7 in the example under consideration can detect the data which is transmitted via the external lines EL which are connected to the input and/or output connections of the microcontroller which are associated with the peripheral units P1 and P3. If it is intended to ensure in all circumstances that the debug resource components DR6 and DR7 are supplied with all the data which is transmitted via the relevant external lines EL, in particular including all the data which has not been emitted from the microcontroller to the external lines EL, as well as all the data which is not intended for the microcontroller, it may be found to be advantageous for the debug resource components DR6 and DR7 to be connected directly to the input and/or output connections.

In the example under consideration, the debug resource components DR6 and DR7 are connected to a total of five of the available input and/or output connections of the microcontroller. It should be evident and requires no further explanation, that the debug resource components which are connected to the input and/or output connections of the microcontroller may be connected independently of one another to any desired number of input and/or output connections, and that any desired number of debug resource components which are connected to input and/or output connections of the microcontroller may be provided. However, there is no need to provide only debug resource components which are connected to the input and/or output connections which are associated with the peripheral units P1 and P3. The available debug resources may additionally or alternatively also be connected to input and/or output connections which are associated with any desired other microcontroller components.

The configuration, the operation and the interaction of the debug resource components DR1 to DR7 will now be described in the following text.

The configuration and the operation of the debug resource components DR1 and DR2 which are connected to the cores C1 and C2 are similar to the configuration and the operation of the debug resources DR of the conventional microcontroller illustrated in Figure 2. The debug resource components DR1 and DR2 make it possible to track and to influence the states and events which occur in the core C1 and C2; in principle, they can carry out the same checks and actions as the debug resources of conventional microcontrollers.

As will be explained in more detail later, the debug resource components DR1 and DR2 may, however, have a reduced functional scope and a correspondingly simpler configuration owing to the presence of the further debug resource components DR3 to DR7, to be more precise owing to the checks and actions which can be carried out by these debug resource components.

The debug resource components which are connected to the internal buses of the microcontroller, that is to say the debug resource components DR3 to DR5 which are connected to the buses BUS1 to BUS3, can detect the data which is transferred via the respective buses, and can emit this data, or information based on it. In order to avoid misunderstandings, it should be noted that the term data should be understood as meaning all signals which can be transmitted via the buses BUS1 to BUS3, that is to say data, addresses and control signals.

The debug resource components DR3 to DR5 can, inter alia, check whether the data which is transferred via the buses BUS1 to BUS3 satisfies specific conditions, for example whether an address which is transmitted via the bus matches a predetermined address or is within a predetermined address range.

It should be evident and requires no further explanation that the conditions which can be checked by the debug resource components DR3 to DR5 may also be any other desired conditions; the conditions which can be checked by the debug resource components DR3 to DR5 may include all the conditions whose checking is necessary or helpful for localization and rectification of faults which occur in the microcontroller or in the system which contains it.

In the example under consideration, the conditions are predetermined by the external control device, which has already been mentioned above, via the interface SS. However, the conditions could also be predetermined by means of one of the other respective debug resource components, or by another microcontroller component.

If one of the debug resource components DR3 to DR5 finds that a condition whose satisfaction it has the task of monitoring is satisfied, it reacts in a predetermined manner.

By way of example, the reaction may comprise the relevant debug resource component emitting the data which is transmitted via the associated bus at the time at which the condition was satisfied, or at a specific earlier time, or at a specific later time. This may be an individual data record or data records which are transmitted successively (trace data). The data which is emitted from the debug resource component is supplied to the interface SS which, as has already been mentioned above, passes this on immediately or later to the external control device.

It would also be possible to provide for the relevant debug resource component to emit a message via the interface SS to the external control device, in addition to or instead of the reaction mentioned above, in order to signal that a specific condition is satisfied.

It would also be possible to provide for the relevant debug resource component to transmit a message such as this, or some other message, to one or more or all of the other debug resource components, and for this message to initiate specific reactions in the debug resource components which receive this message. The reaction by a debug resource component which receives this message may, for example, comprise the emission of specific data, to which it has access, via the interface SS to the external control device, or carrying out specific other actions, for example stopping the core with which it is associated. The reaction may in this case also be made dependent on satisfaction of one or more further conditions, in which case the satisfaction of these conditions can be monitored by the respective debug resource component itself, or by another debug resource component.

Conversely, the debug resource components DR3 to DR5 may also receive messages from other debug resource components, signaling the presence of a specific state or the occurrence of a specific event, with the debug resource components reacting to a message such as this in a predetermined manner.

It should be evident and requires no further explanation that the debug resource components DR3 to DR5 may also react in any other different manner to said states and events, or to other states and events. The actions which can be carried out by the debug resource components DR3 to DR5 may include all actions whose implementation is necessary or helpful to localization and rectification of faults which occur in the microcontroller or in the system which contains it.

The debug resource components DR3 to DR5 may carry out said actions and other actions in response to an appropriate stimulus, even independently of the satisfaction of a specific condition.

The actions which the debug resource components DR3 to DR5 have to carry out, and the conditions in which and when they have to carry out these actions, are predetermined for the debug resource components DR3 to DR5 in the example under consideration via the interface SS by the control device which is provided outside the microcontroller. However, they could also be predetermined by one of the respective other debug resource components, or by some other microcontroller component.

Due to the fact that the debug resource components DR3 to DR5 detect the addresses, data and/or control signals transferred via the buses BUS1 to BUS3 and emit this data or information based on it to the interface SS and/or to the other debug resource components, the debug resource components DR1 and DR2 which are associated with the cores C1 and C2 may be designed to be very simple. Their function can be restricted to monitoring the commands which are carried out in the respective core, of influencing them and/or of emitting data which is related to the commands or to the program sequence to the interface SS; in this case, it may even be sufficient to monitor the current status of the program counter and, if required, to emit this to the interface SS.

The debug resource components DR6 to DR7 which are connected to the input and/or output connections of the microcontroller may detect the data which is transmitted via the external lines EL, which are connected to the input and/or output connections of the microcontroller, and to which the debug resource components DR6 to DR7 are also connected. To be more precise, the debug resource components DR6 to DR7 detect this data and emit this data, or information based on it. In order to avoid misunderstandings, it should be noted that the term data should be regarded as covering all signals which can be transmitted via the external lines EL, that is to say data, addresses and control signals.

Particularly if the debug resource components DR6 and DR7 are connected directly to the input and/or output connections, that is to say without the interposition of further microcontroller components, but not only in this situation, the debug resource components DR6 and DR7 may even always detect all the data which is transmitted via the external lines EL which are connected to them, that is to say including the data which has not been emitted from the microcontroller to the external lines and data which is not intended for the microcontroller.

The debug resource components DR6 and DR7 may, inter alia, check whether the data which is transferred via the external lines EL satisfies specific conditions, for example whether an address which is transmitted via the external lines EL matches a predetermined address or is within a predetermined address range.

It should be evident and requires no further explanation that the conditions which can be checked by the debug resource components DR6 and DR7 may also be any other desired conditions; the conditions which can be checked by the debug resource components DR6 to DR7 may include all the conditions whose checking is necessary or helpful for localization and rectification of faults which occur in the microcontroller or in the system which contains it.

In the example under consideration, the conditions are predetermined by the external control device via the interface SS. However, the condition could also be predetermined by one of the respective other debug resource components or by another microcontroller component.

If one of the debug resource components DR6 and DR7 finds that a condition whose satisfaction it is intended to monitor is satisfied, it reacts in a predetermined manner.

By way of example, the reaction may comprise the relevant debug resource component emitting the data which is transmitted via the external lines EL that are connected to the relevant debug resource component at the time when the condition is satisfied, or at a specific earlier time, or at a specific later time. This may be an individual data record or successively transmitted data records (trace data). The data emitted from the debug resource component is supplied to the interface SS which, as has already been mentioned above, passes this on immediately or later to the external control device.

It would also be possible to provide for the relevant debug resource component to emit a message to the external control device via the interface SS instead of or in addition to the reaction mentioned above, with this message signaling that a specific condition is satisfied.

It would also be possible to provide for the relevant debug resource component to transmit a message such as this or some other message to one or more or to all of the other debug resource components, and for this message to initiate specific reactions in the debug resource components which receive this message. The reaction of a debug resource component which receives this message may, for example, comprise this debug resource component emitting specific data, to which it has access, via the interface SS to the external control device, or carrying out specific other actions, for example stopping the core with which it is associated. The reaction may in this case also be made dependent on the satisfaction of one or more further conditions, in which case the satisfaction of these conditions can be monitored by the respective debug resource component itself, or by another debug resource component.

Conversely, the debug resource components DR6 and DR7 may also receive messages from other debug resource components, signaling the presence of a specific state or the occurrence of a specific event, and reacting to such a message in a predetermined manner.

It should be evident and requires no further explanation that the debug resource components can also react in any other desired manner to the said states and events or to other states and events. The actions which can be carried out by the debug resource components DR3 to DR5 may include all the actions whose implementation is necessary or helpful for localization and rectification of faults which occur in the microcontroller or in the system which contains it.

The debug resource components DR6 and DR7 may carry out said actions and other actions in response to an appropriate stimulus even independently of the satisfaction of a specific condition.

The control device which is provided outside the microcontroller in the example under consideration predetermines for the debug resource components DR6 and DR7, via the interface SS, what actions the debug resource components DR6 and DR7 have to carry out, and in what conditions and when they have to carry out these actions. However, this could also be predetermined by one of the respective other debug resource components, or by another microcontroller component.

It may be found to be advantageous for the debug resource components DR6 and DR7 to have a data processing device which processes the data detected by the debug resource components DR6 and DR7, and for the results of the data processing which is carried out by the data processing devices to be used as the basis for the checks to be carried out by the debug resource components DR6 and DR7, and/or to be emitted. By way of example but by no means exclusively, the provision of such a data processing device makes it possible to extract specific information from a datastream which is transmitted bit-by-bit in serial form, for example the content of the identifier field of a message which is transmitted via a CAN bus.

It may be found to be advantageous for the data processing devices to at least partially carry out the same operations as the microcontroller components for which the data which is transmitted via the external lines is intended, and/or from which the data which is emitted to the external lines originate. For example, it is thus possible, but not essential, to check the correct operation of the microcontroller components for which the data which is transmitted via the external lines EL is intended, and/or from which the data which is transmitted via the external lines EL originates.

It may also be found to be advantageous for the debug resource components DR6 and DR7 to have checking devices, by means of which, for example, it is possible to determine:
- how frequently data is transmitted via the external lines EL, and/or
- the times at which data is transmitted via the external lines EL, and/or
- the system components from which the respective data originates and/or the system components for which the respective data is intended, and/or
- whether the data is being transmitted without errors. This information makes it possible, but not essential, for example, to determine
- whether and if appropriate when the microcontroller or some other component in the system which contains it may or should emit additional data or less data to the external lines, and/or
- whether the system components which are connected to the external lines are operating without faults.

The debug resource components DR6 and DR7 thus also make it possible to carry out investigations for which specific test equipment and/or instruments were/was required until now. The procurement of these instruments and their connection was associated with immense costs, which are completely avoided by the provision of the debug resource components DR6 and DR7.

It should be evident that the above description of the operation and the cooperation of the debug resource components DR1 to DR7 should be regarded only by way of example. The debug resource components may also have any further or other desired functions, and/or may cooperate in a different manner.

It should also be evident that the use of the described debug resources is also regarded as being advantageous for microcontrollers with more or less than two cores and/or with more or less and/or other components and buses.

Furthermore, it is not absolutely essential for the debug resources to have
- both debug resource components for tracking and influencing the states and events which occur in the cores,
- as well as debug resource components for tracking the data which is transferred via the internal buses of the microcontroller,
- and debug resource components for tracking the data which is transferred via the external lines EL.

In fact, for example, it is possible for the debug resources to have
- only debug resource components for tracking the data which is transferred via the external lines EL, or
- only debug resource components for tracking the data which is transferred via the external lines EL, and debug resource components for tracking and influencing the states and events which occur in the cores, or
- only debug resource components for tracking the data which is transferred via the external lines EL, and debug resource components for tracking the data which is transferred via the internal buses of the microcontroller.

The debug resource components DR1 to DR7 are optional components of the microcontroller. This means that the microcontroller will still operate correctly without the debug resource components DR1 to DR7.

It is possible to provide for the microcontroller to be formed by a multichip module comprising two semiconductor chips, with the second semiconductor chip containing the debug resource components DR1 to DR7, and the first semiconductor chip containing the remaining components of the microcontroller. In this case, the actual microcontroller is formed by the first semiconductor chip and the second semiconductor chip is an optional semiconductor chip, which may be omitted; the first semiconductor chip, which forms the actual microcontroller, still operates correctly without the second semiconductor chip. It is preferable for two microcontroller variants to be produced, namely a first variant with a second semiconductor chip, and a second variant without a second semiconductor chip. The first microcontroller variant is a development variant, which is used during the development of the system which contains the microcontroller, to be precise preferably only in this phase. The second microcontroller variant is a large-scale production variant, which is used in the completely developed system.

The two semiconductor chips are, for example, soldered to one another using flip-chip technology. However, they may also be arranged alongside one another and connected to one another via bonding wires.

It is, of course, also possible to accommodate one, some or all of the debug resource components on the first semiconductor chip. In this case, it has been found to be advantageous for the debug resource components which are provided on the first semiconductor chip to be arranged right at the edge of the first semiconductor chip, so that semiconductor chips can also be produced without these components in a very simple manner by covering those areas which are associated with these components with the exposure masks which are used for semiconductor chip production. The configuration of a semiconductor chip in which different semiconductor chip variants can be produced by covering or not covering specific areas of the exposure masks is known from DE 101 00 344 A1.

The described programmable unit has been found to be advantageous irrespective of the details of its practical implementation: the debug resources provided in it make it possible in a surprisingly simple manner for the most widely differing faults within and even outside the programmable unit to be localized and to be rectified.

## Claims

1. A programmable unit with debug resources (DR1-DR7) for tracking and influencing the states which occur in the programmable unit (PGN) and the processes being carried out, wherein
- the debug resources (DR1-DR7) comprise one or more components (DR6, DR7) which have connections to a first group of input and/or output connections of the programmable unit, via which data is transmitted between other components (C1, C2, P1-P3, S1-S3) of the programmable unit and external system components which are provided outside the programmable unit, and
- the debug resource components which are connected to the first group of input and/or output connections are designed such that they detect data which is transmitted via external lines (EL) provided between the first group of input and/or output connections and the external system components,
**characterized in that**
- the debug resource components (DR6, DR7) which are connected to the first group of input and/or output connections
- monitor whether the data transfers taking place via the external lines (EL) satisfy a predetermined condition, and/or
- determine how frequently data is transmitted via the external lines (EL), and that
- the debug resource components (DR6, DR7) are connected via a second group of input and/or output connections of the programmable unit to a control device which is provided outside the programmable unit, and wherein the input and/or output connections belonging to the second group of input and/or output connections of the programmable unit do not belong to the first group of input and/or output connections.

2. The programmable unit as claimed in claim 1, wherein no data which is intended for the debug resource components (DR6, DR7) is supplied via the first group of input and/or output connections to the debug resource components (DR6, DR7), and wherein the debug resource components do not emit any data, or at most emit data which is used for testing the external lines (EL) and/or the devices which are connected to one another via the external lines (EL), via the first group of input and/or output connections.

3. The programmable unit as claimed in claim 1,wherein the debug resource components (DR6, DR7) which are connected to the first group of input and/or output connections are connected directly to the first group of input and/or output connections without the interposition of further components (C1, C2, P1-P3, S1-S3, DR1-DR5) of the programmable unit.

4. The programmable unit as claimed in claim 1, wherein the debug resource components (DR6, DR7) which are connected to the first group of input and/or output connections are connected indirectly to the first group of input and/or output connections via further components of the programmable unit.

5. The programmable unit as claimed in claim 4, wherein the further components of the programmable unit via which the debug resource components (DR6, DR7) are connected to the first group of input and/or output connections are components which do not change the content of the data which is to be emitted via the first group of input and/or output connections, or of the data which is received via the first group of input and/or output connections.

6. The programmable unit as claimed in claim 1, wherein a control device which is provided outside the programmable unit controls the debug resource components (DR6, DR7) which are connected to the first group of input and/or output connections.

7. The programmable unit as claimed in claim 1, wherein another component (C1, C2, P1-P3, S1-S3, DR1-DR5) of the programmable unit controls the debug resource components (DR6, DR7) which are connected to the first group of input and/or output connections.

8. The programmable unit as claimed in claim 1, wherein the debug resource components (DR6, DR7) which are connected to the first group of input and/or output connections emit at least portions of the detected data, or information based on it.

9. The programmable unit as claimed in claim 8, wherein the debug resource components (DR6, DR7) which are connected to the first group of input and/or output connections emit at least portions of the detected data or the information based on it when a condition is satisfied whose satisfaction is to be monitored by the debug resource components.

10. The programmable unit as claimed in claim 8, wherein the debug resource components (DR6, DR7) which are connected to the first group of input and/or output connections emit the detected data or the information based on it to a control device which is provided outside the programmable unit.

11. The programmable unit as claimed in claim 8, wherein the debug resource components (DR6, DR7) which are connected to the first group of input and/or output connections emit the detected data or the information based on it to another component (C1, C2, P1-P3, S1-S3, DR1-DR5) of the programmable unit.

12. The programmable unit as claimed in claim 1, wherein the debug resource components which are connected to the first group of input and/or output connections contain a data processing device which processes the detected data.

13. The programmable unit as claimed in claim 12, wherein the debug resource components which are connected to the first group of input and/or output connections monitor whether the result of the data processing which is carried out by the data processing device satisfies a predetermined condition.

14. The programmable unit as claimed in claim 12, wherein the debug resource components (DR6, DR7) which are connected to the first group of input and/or output connections emit the result of the data processing which is carried out by the data processing device.

15. The programmable unit as claimed in claim 1, wherein the debug resource components (DR6, DR7) which are connected to the first group of input and/or output connections determine the times at which data is transmitted via the external lines (EL).

16. The programmable unit as claimed in claim 1, wherein the debug resource components (DR6, DR7) which are connected to the first group of input and/or output connections determine the system component from which the respective data originates and/or the system component for which the respective data is intended.

17. The programmable unit as claimed in claim 1,wherein the debug resource components (DR6, DR7) which are connected to the first group of input and/or output connections determine whether the detected data has been transmitted without any errors.

18. The programmable unit as claimed in claim 1,wherein the debug resource components (DR6, DR7) which are connected to the first group of input and/or output connections determine whether, and if appropriate when, the programmable unit or any other component of the system containing the programmable unit has to emit additional data or less data to the external lines.

19. The programmable unit as claimed in claim 1, wherein the debug resource components (DR6, DR7) which are connected to the first group of input and/or output connections determine whether the devices which are connected to one another via the external lines (EL) are operating without any defects.

## Patentansprüche

1. Programmierbare Einheit mit Debug-Ressourcen (DR1-DR7) zur Verfolgung und Beeinflussung der in der programmierbaren Einheit (PGN) auftretenden Zustände und ablaufenden Vorgänge, wobei
- die Debug-Ressourcen (DR1-DR7) eine oder mehrere Komponenten (DR6, DR7) umfassen, die Verbindungen zu einer ersten Gruppe von Ein- und/oder Ausgabeanschlüssen der programmierbaren Einheit aufweisen, über welche zwischen anderen Komponenten (C1, C2, P1-P3, S1-S3) der programmierbaren Einheit und außerhalb der programmierbaren Einheit vorgesehenen externen Systemkomponenten Daten übertragen werden, und
- die mit der ersten Gruppe von Ein- und/oder Ausgabeanschlüssen verbundenen Debug-Ressourcen-Komponenten so ausgebildet sind, dass sie die Daten erfassen, die über zwischen der ersten Gruppe von Ein- und/oder Ausgabeanschlüssen und den externen Systemkomponenten vorgesehenen externen Leitungen (EL) übertragen werden,
**dadurch gekennzeichnet,**
- **dass** die mit der ersten Gruppe von Ein- und/oder Ausgabeanschlüssen verbundenen Debug-Ressourcen-Komponenten (DR6, DR7)
- überwachen, ob die über die externen Leitungen (EL) erfolgenden Datentransfers eine vorgegebene Bedingung erfüllen, und/oder
- ermitteln, wie häufig über die externen Leitungen (EL) Daten übertragen werden, und dass
- die Debug-Ressourcen-Komponenten (DR6, DR7) über eine zweite Gruppe von Ein- und/oder Ausgabeanschlüssen der programmierbaren Einheit mit einer außerhalb der programmierbaren Einheit vorgesehenen Steuereinrichtung verbunden sind, und dass die zur zweiten Gruppe von Ein - und/oder Ausgabeanschlüssen gehörenden Ein- und/oder Ausgabeanschlüsse der programmierbaren Einheit nicht zur ersten Gruppe von Ein- und/oder Ausgabeanschlüssen gehören.

2. Programmierbare Einheit nach Anspruch 1, wobei den Debug-Ressourcen-Komponenten (DR6, DR7) über die erste Gruppe von Ein- und/oder Ausgabeanschlüssen keine für die Debug-Ressourcen-Komponenten (DR6, DR7) bestimmte Daten zugeführt werden, und wobei die Debug-Ressourcen-Komponenten über die erste Gruppe von Ein- und/oder Ausgabeanschlüssen keine oder allenfalls zum Testen der externen Leitungen (EL) und/oder der über die externen Leitungen (EL) miteinander verbundenen Einrichtungen dienende Daten ausgibt.

3. Programmierbare Einheit nach Anspruch 1, wobei die mit der ersten Gruppe von Ein- und/oder Ausgabeanschlüssen verbundenen Debug-Ressourcen-Komponenten (DR6, DR7) ohne Zwischenschaltung weiterer Komponenten (C1, C2, P1-P3, S1-S3, DR1-DR5) der programmierbaren Einheit direkt mit der ersten Gruppe von Ein- und/oder Ausgabeanschlüssen verbunden sind.

4. Programmierbare Einheit nach Anspruch 1, wobei die mit der ersten Gruppe von Ein- und/oder Ausgabeanschlüssen verbundenen Debug-Ressourcen-Komponenten (DR6, DR7) über weitere Komponenten der programmierbaren Einheit indirekt mit der ersten Gruppe von Ein- und/oder Ausgabeanschlüssen verbunden sind.

5. Programmierbare Einheit nach Anspruch 4, wobei die weiteren Komponenten der programmierbaren Einheit, über welche die Debug-Ressourcen-Komponenten (DR6, DR7) mit der ersten Gruppe von Ein- und/oder Ausgabeanschlüssen verbunden sind, solche Komponenten sind, die die über die erste Gruppe von Ein- und/oder Ausgabeanschlüssen auszugebenden oder die über die erste Gruppe von Ein- und/oder Ausgabeanschlüssen empfangenen Daten inhaltlich nicht verändern.

6. Programmierbare Einheit nach Anspruch 1, wobei eine außerhalb der programmierbaren Einheit vorgesehene Steuereinrichtung die mit der ersten Gruppe von Ein- und/oder Ausgabeanschlüssen verbundenen Debug-Ressourcen-Komponenten (DR6, DR7) steuert.

7. Programmierbare Einheit nach Anspruch 1, wobei eine andere Komponente (C1, C2, P1-P3, S1-S3, DR1-DR5) der programmierbaren Einheit die mit der ersten Gruppe von Ein - und/oder Ausgabeanschlüssen verbundenen Debug-Ressourcen-Komponenten (DR6, DR7) steuert.

8. Programmierbare Einheit nach Anspruch 1, wobei die mit der ersten Gruppe von Ein- und/oder Ausgabeanschlüssen verbundenen Debug-Ressourcen-Komponenten (DR6, DR7) zumindest Teile der erfassten Daten oder darauf basierende Informationen ausgeben.

9. Programmierbare Einheit nach Anspruch 8, wobei die mit der ersten Gruppe von Ein- und/oder Ausgabeanschlüssen verbundenen Debug-Ressourcen-Komponenten (DR6, DR7) zumindest Teile der erfassten Daten oder die darauf basierenden Informationen ausgeben, wenn eine Bedingung erfüllt ist, deren Erfüllung die Debug-Ressourcen-Komponenten zu überwachen haben.

10. Programmierbare Einheit nach Anspruch 8, wobei die mit mit der ersten Gruppe von Ein- und/oder Ausgabeanschlüssen verbundenen Debug-Ressourcen-Komponenten (DR6, DR7) die erfassten Daten oder die darauf basierenden Informationen an eine außerhalb der programmierbaren Einheit vorgesehene Steuereinrichtung ausgeben.

11. Programmierbare Einheit nach Anspruch 8, wobei die mit der ersten Gruppe von Ein- und/oder Ausgabeanschlüssen verbundenen Debug-Ressourcen-Komponenten (DR6, DR7) die erfassten Daten oder die darauf basierenden Informationen an eine andere Komponente (C1, C2, P1-P3, S1-S3, DR1-DR5) der programmierbaren Einheit ausgeben.

12. Programmierbare Einheit nach Anspruch 1, wobei die mit der ersten Gruppe von Ein- und/oder Ausgabeanschlüssen verbundenen Debug-Ressourcen-Komponenten eine Datenverarbeitungseinrichtung enthalten, welche die erfassten Daten verarbeitet.

13. Programmierbare Einheit nach Anspruch 12, wobei die mit der ersten Gruppe von Ein- und/oder Ausgabeanschlüssen verbundenen Debug-Ressourcen-Komponenten überwachen, ob das Ergebnis der durch die Datenverarbeitungseinrichtung durchgeführten Datenverarbeitung eine vorgegebene Bedingung erfüllt.

14. Programmierbare Einheit nach Anspruch 12, wobei die mit der ersten Gruppe von Ein- und/oder Ausgabeanschlüssen verbundenen Debug-Ressourcen-Komponenten (DR6, DR7) das Ergebnis der durch die Datenverarbeitungseinrichtung durchgeführten Datenverarbeitung ausgeben.

15. Programmierbare Einheit nach Anspruch 1, wobei die mit der ersten Gruppe von Ein- und/oder Ausgabeanschlüssen verbundenen Debug-Ressourcen-Komponenten (DR6, DR7) ermitteln, zu welchen Zeitpunkten über die externen Leitungen (EL) Daten übertragen werden.

16. Programmierbare Einheit nach Anspruch 1, wobei die mit der ersten Gruppe von Ein- und/oder Ausgabeanschlüssen verbundenen Debug-Ressourcen-Komponenten (DR6, DR7) ermitteln, von welcher Systemkomponente die jeweiligen Daten stammen und/oder für welche Systemkomponente die jeweiligen Daten bestimmt sind.

17. Programmierbare Einheit nach Anspruch 1, wobei die mit der ersten Gruppe von Ein- und/oder Ausgabeanschlüssen verbundenen Debug-Ressourcen-Komponenten (DR6, DR7) ermitteln, ob die erfassten Daten fehlerfrei übertragen wurden.

18. Programmierbare Einheit nach Anspruch 1, wobei die mit der ersten Gruppe von Ein- und/oder Ausgabeanschlüssen verbundenen Debug-Ressourcen-Komponenten (DR6, DR7) ermitteln, ob und gegebenenfalls wann die programmierbare Einheit oder eine sonstige Komponente des die programmierbare Einheit enthaltenden Systems zusätzliche Daten oder weniger Daten auf die externen Leitungen auszugeben hat.

19. Programmierbare Einheit nach Anspruch 1, wobei die mit der ersten Gruppe von Ein- und/oder Ausgabeanschlüssen verbundenen Debug-Ressourcen-Komponenten (DR6, DR7) ermitteln, ob die über die externen Leitungen (EL) miteinander verbundenen Einrichtungen fehlerfrei arbeiten.

## Revendications

1. Unité programmable à ressources de débogage (DR1-DR7) pour suivre et influencer les états qui se produisent dans l'unité programmable (PGN) et les processus exécutés, dans laquelle
- les ressources de débogage (DR1-DR7) comprennent un ou plusieurs composants (DR6, DR7) qui ont des connexions avec un premier groupe de connexions d'entrée et/ou de sortie de l'unité programmable, par l'intermédiaire desquelles des données sont transmises entre d'autres composants (C1, C2, P1-P3, S1-S3) de l'unité programmable et des composants de système externe qui sont fournis en dehors de l'unité programmable, et
- les composants de ressources programmables qui sont connectés au premier groupe de connexions d'entrée et/ou sortie sont conçus de telle sorte qu'ils détectent les données transmises par l'intermédiaire de lignes externes (EL) fournies entre le premier groupe de connexions d'entrée et/ou sortie et les composants de système externe,
**caractérisée en ce que**
- les composants de ressources programmables (DR6, DR7) qui sont connectés au premier groupe de connexions d'entrée et/ou sortie
- contrôlent que les transferts de données se produisant par l'intermédiaire des lignes externes (EL) satisfont ou non une condition prédéterminée, et/ou
- déterminent la fréquence de transmission des données par l'intermédiaire des lignes externes (EL), et **en ce que**
- les composants de ressources programmables (DR6, DR7) sont connectés par l'intermédiaire d'un seconde groupe de connexions d'entrée et/ou sortie de l'unité de programmable à un dispositif de commande qui est fourni en dehors de l'unité de programmable, et dans lequel les connexions d'entrée et/ou sortie appartenant au second groupe de connexions d'entrée et/ou sortie de l'unité programmable n'appartiennent pas au premier groupe de connexions d'entrée et/ou sortie.

2. Unité programmable selon la revendication 1, dans laquelle les données destinées aux composants de ressources de débogage (DR6, DR7) sont fournies par l'intermédiaire du premier groupe de connexions d'entrée et/ou de sortie aux composants de ressources de débogage (DR6, DR7), et dans laquelle les composants de ressources de débogage n'émettent aucune donnée, ou au plus émettent des données utilisées pour tester les lignes externes (EL) et/ou les dispositifs connectés les uns aux autres par l'intermédiaire des lignes externes (EL), par l'intermédiaire du premier groupe de connexions d'entrée et/ou de sortie.

3. Unité programmable selon la revendication 1, dans laquelle les composants de ressources de débogage (DR6, DR7) connectés au premier groupe de connexions d'entrée et/ou de sortie sont connectés directement au premier groupe de connexions d'entrée et/ou de sortie sans l'interposition d'autres composants (C1 C2, P1-P3, S1-S3, DR1-DR5) de l'unité programmable.

4. Unité programmable selon la revendication 1, dans laquelle les composants de ressources de débogage (DR6, DR7) connectés au premier groupe de connexions d'entrée et/ou de sortie sont connectés indirectement au premier groupe de connexions d'entrée et/ou de sortie par l'intermédiaire d'autres composants de l'unité programmable.

5. Unité programmable selon la revendication 4, dans laquelle les autres composants de l'unité programmable par l'intermédiaire desquels les composants de ressources de débogage (DR6, DR7) sont connectés au premier groupe de connexions d'entrée et/ou de sortie sont des composants qui ne changent pas le contenu des données qui doivent être émises par l'intermédiaire du premier groupe de connexions d'entrée et/ou sortie, ou des données qui sont reçues par l'intermédiaire du premier groupe de connexions d'entrée et/ou de sortie.

6. Unité programmable selon la revendication 1, dans laquelle un dispositif de commande qui est fourni en dehors de l'unité programmable commande les composants de ressources de débogage (DR6, DR7) qui sont connectés au premier groupe de connexions d'entrée et/ou de sortie.

7. Unité programmable selon la revendication 1, dans laquelle un autre composant (C1, C2, P1-P3, S1-S3, DR1-DR5) de l'unité programmable commande les composants de ressources de débogage (DR6, DR7) qui sont connectés au premier groupe de connexions d'entrée et/ou de sortie.

8. Unité programmable selon la revendication 1, dans laquelle les composants de ressources de débogage (DR6, DR7) qui sont connectés au premier groupe de connexions d'entrée et/ou de sortie émettent au moins des parties des données détectées, ou des informations basées sur celles-ci.

9. Unité programmable selon la revendication 8, dans laquelle les composants de ressources de débogage (DR6, DR7) qui sont connectés au premier groupe de connexions d'entrée et/ou de sortie émettent au moins des parties des données détectées, ou des informations basées sur celles-ci quand une condition est satisfaite, cette satisfaction étant contrôlée par les composants de ressources de débogage.

10. Unité programmable selon la revendication 8, dans laquelle les composants de ressources de débogage (DR6, DR7) qui sont connectés au premier groupe de connexions d'entrée et/ou de sortie émettent les données détectées, ou les informations basées sur celles-ci vers un dispositif de commande qui est fourni en dehors de l'unité programmable.

11. Unité programmable selon la revendication 8, dans laquelle les composants de ressources de débogage (DR6, DR7) qui sont connectés au premier groupe de connexions d'entrée et/ou de sortie émettent les données détectées, ou les informations basées sur celles-ci vers un autre composant (C1, C2, P1-P3, S1-S3, DR1-DR5) de l'unité programmable.

12. Unité programmable selon la revendication 1, dans laquelle les composants de ressources de débogage qui sont connectés au premier groupe de connexions d'entrée et/ou de sortie contiennent un dispositif de traitement de données qui traite les données détectées.

13. Unité programmable selon la revendication 12, dans laquelle les composants de ressources de débogage qui sont connectés au premier groupe de connexions d'entrée et/ou de sortie contrôlent que le résultat du traitement de données effectué par le dispositif de traitement de données satisfait ou non une condition prédéterminée.

14. Unité programmable selon la revendication 12, dans laquelle les composants de ressources de débogage (DR6, DR7) qui sont connectés au premier groupe de connexions d'entrée et/ou de sortie émettent le résultat du traitement de données effectué par le dispositif de traitement de données.

15. Unité programmable selon la revendication 1, dans laquelle les composants de ressources de débogage (DR6, DR7) qui sont connectés au premier groupe de connexions d'entrée et/ou de sortie déterminent les temps auxquels les données sont transmises par l'intermédiaire des lignes externes (EL).

16. Unité programmable selon la revendication 1, dans laquelle les composants de ressources de débogage (DR6, DR7) qui sont connectés au premier groupe de connexions d'entrée et/ou de sortie déterminent le composant de système d'où proviennent les données respectives et/ou le composant de système auquel les données respectives sont destinées.

17. Unité programmable selon la revendication 1, dans laquelle les composants de ressources de débogage (DR6, DR7) qui sont connectés au premier groupe de connexions d'entrée et/ou de sortie déterminent que les données détectées ont été transmises ou non sans aucune erreur.

18. Unité programmable selon la revendication 1, dans laquelle les composants de ressources de débogage (DR6, DR7) qui sont connectés au premier groupe de connexions d'entrée et/ou de sortie déterminent que, et s'il y a lieu quand, l'unité programmable ou tout autre composant du système contenant l'unité programmable doit émettre des données supplémentaires ou moins de données vers les lignes externes.

19. Unité programmable selon la revendication 1, dans laquelle les composants de ressources de débogage (DR6, DR7) qui sont connectés au premier groupe de connexions d'entrée et/ou de sortie déterminent que les dispositifs qui sont connectés les uns aux autres par l'intermédiaire des lignes externes (EL) fonctionnent sans aucun défaut.
